# EUROPEAN PATENT SPECIFICATION

(11) **EP 3 809 730 B1**
(45) Date of publication and mention of the grant of the patent: **20.11.2024**
(21) Application number: 18922906.5
(22) Date of filing: 14.06.2018
(51) Int. Cl.: H04W 4/029, H04W 36/16, G08G 5/00, H04W 4/40, H04W 36/32, H04W 88/02

(54) **INFORMATION TRANSMISSION METHOD AND DEVICE**
INFORMATIONSÜBERTRAGUNGSVERFAHREN UND -VORRICHTUNG
PROCÉDÉ ET DISPOSITIF DE TRANSMISSION D'INFORMATIONS

(43) Date of publication of application: 21.04.2021
(73) Proprietor: Beijing Xiaomi Mobile Software Co., Ltd., Beijing 100085 (CN)
(72) Inventor: HONG, Wei, Beijing 100085 (CN)
(74) Representative: Dehns Germany Partnerschaft mbB
(86) International application number: PCT/CN2018/091359
(87) International publication number: WO 2019/237314

(56) References cited:
- EP-A1- 3 764 685
- CN-A- 101 867 989
- CN-A- 104 053 197
- CN-A- 108 064 360
- CN-A- 108 064 465
- CN-A- 108 886 668
- US-A1- 2011 274 087
- US-A1- 2020 344 661
- NOKIA ET AL: "Text Proposal to 36.331: Flight path information", vol. RAN WG2, no. Busan, South Korea; 20180521 - 20180525, 20 May 2018 (2018-05-20), XP051444218, Retrieved from the Internet <URL:http://www.3gpp.org/ftp/Meetings%5F3GPP%5FSYNC/RAN2/Docs/> [retrieved on 20180520]
- LG ELECTRONICS INC: "Zone-based Flight Path Reporting", vol. RAN WG2, no. Busan, Republic of Korea; 20180521 - 20180525, 20 May 2018 (2018-05-20), XP051444864, Retrieved from the Internet <URL:http://www.3gpp.org/ftp/Meetings%5F3GPP%5FSYNC/RAN2/Docs/> [retrieved on 20180520]
- SEUNGJUNE YI ET AL: "Radio Protocols for LTE and LTE-Advanced", 2012, JOHN WILLEY & SONS, ISBN: 978-1-118-18856-9, pages: 65 - 71, XP093023701
- "3rd Generation Partnership Project; Technical Specification Group Radio Access Network; Evolved Universal Terrestrial Radio Access Network (E-UTRAN); X2 application protocol (X2AP) (Release 15)", 3GPP STANDARD; TECHNICAL SPECIFICATION; 3GPP TS 36.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V15.1.0, 6 April 2018 (2018-04-06), pages 1 - 354, XP051451042
- "3rd Generation Partnership Project; Technical Specification Group Radio Access Network; Evolved Universal Terrestrial Radio Access Network (E-UTRAN); S1 Application Protocol (S1AP) (Release 15)", 3GPP STANDARD; TECHNICAL SPECIFICATION; 3GPP TS 36.413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V15.1.0, 6 April 2018 (2018-04-06), pages 1 - 368, XP051451040

## Description

### CROSS REFERNECE TO RELATED APPLICATION

The present disclosure claims priority to International Patent Application No. PCT/CN2018/091359 filed on June 14, 2018.

### TECHNICAL FIELD

The present disclosure relates to the field of communication, in particular to information transmission methods and apparatuses.

### BACKGROUND

The unmanned aerial vehicle is also known as UAV, which is operated by a radio remote control device with a program control apparatus therein.

With the continuous development of UAV technology, UAV has been widely used. In order to further expand the application range of UAV, cellular network is required to provide some expected service to UAV. However, there is not an existing technical solution for the cellular network obtaining the flight path information on UAV, which reduces the service quality provided by the cellular network for UAV.
NOKIA ET AL: "Text Proposal to 36.331: Flight path information", 3GPP DRAFT; R2-1807886, 3RD GENERATION PARTNERSHIP PROJECT (3GPP), RAN WG2, 20 May 2018, XP051444218, discusses providing the UAV flight path information via RRC signaling.
CN108064360A discloses an unmanned aerial vehicle controlling method and apparatus.
LG ELECTRONICS INC: "Zone-based Flight Path Reporting", 3GPP DRAFT; R2-1808610, 3RD GENERATION PARTNERSHIP PROJECT (3GPP), RAN WG2, 20 May 2018, XP 051444864, discusses how UE contains the flight path information to eNB using zone-based mechanism. Seungjune Yi ET AL: "Radio Protocols for LTE and LTE-Advanced", John Willey & Sons, 2012, pages 65-71, XP093023701, ISBN: 978-1-118-18856-9, discloses a handover procedure consisting of the following three phases: handover preparation, handover execution, and handover completion. "3rd Generation Partnership Project; Technical Specification Group Radio Access Network; Evolved Universal Terrestrial Radio Access Network (E-UTRAN); X2 application protocol (X2AP) (Release 15)", 3GPP STANDARD; TECHNICAL SPECIFICATION; 3GPP TS 36.423 V15.1.0, 6 April 2018, pages 1-354, XP051451042, specifies the radio network layer signalling procedures of the control plane between eNBs in E-UTRAN. "3rd Generation Partnership Project; Technical Specification Group Radio Access Network; Evolved Universal Terrestrial Radio Access Network (E-UTRAN); S1 Application Protocol (S1 AP) (Release 15)", 3GPP STANDARD; TECHNICAL SPECIFICATION; 3GPP TS 36.413 V15.1.0, 6 April 2018, pages 1-368, XP051451040, specifies the E-UTRAN radio network layer signaling protocol for the S1 interface.

### SUMMARY

In order to overcome the problems in the related art, the embodiments of the present disclosure provide an information transmission method and apparatus.

a method is provided as defined by claims 1 to 4:

From a second aspect of the present disclosure, an information transmission apparatus is provided as defined by claims 5 to 8.

The technical solutions provided by the examples of the present disclosure may include the following beneficial effects:

In the present disclosure, a source base station obtains flight path information on an UAV and sends the flight path information to a target base station, so that the target base station can provide network service to the UAV according to the flight path information on the UAV, thereby realizing the transmission of flight path information on UAV between base stations, and also improving the service quality of the target base station.

In the present disclosure, the target base station receives flight path information on an UAV sent by a source base station and provides network service to the UAV according to the flight path information, thereby realizing the transmission of flight path information on UAV between base stations, and also improving the service quality of the target base station.

It should be understood that the above general description and the following detailed description are only exemplary and explanatory, but not restrictive of the present disclosure.

### BRIEF DESCRIPTION OF THE DRAWINGS

The accompanying drawings, which are incorporated in and constitute a part of this specification, illustrate examples consistent with the present disclosure and, together with the description, serve to explain the principles of the disclosure.
FIG. 1 is a flowchart illustrating an information transmission method according to some embodiments;
FIG. 2A is an application scene diagram illustrating an information transmission method according to some embodiments;
FIG. 2B is another application scene diagram illustrating an information transmission method according to some embodiments;
FIG. 3 is a flowchart illustrating another information transmission method according to some embodiments;
FIG. 4 is a flowchart illustrating an information transmission method according to some embodiments;
FIG. 5 is a flowchart illustrating an information transmission method according to some embodiments;
FIG. 6 is a flowchart illustrating another information transmission method according to some embodiments;
FIG. 7 is a flowchart illustrating another information transmission method according to some embodiments;
FIG. 8 is a block diagram illustrating an information transmission apparatus according to some embodiments;
FIG. 9 is a block diagram illustrating another information transmission apparatus according to some embodiments;
FIG. 10 is a block diagram illustrating an information transmission apparatus according to some embodiments;
FIG. 11 is a block diagram illustrating another information transmission apparatus according to some embodiments;
FIG. 12 is a block diagram illustrating another information transmission apparatus according to some embodiments;
FIG. 13 is a block diagram illustrating another information transmission apparatus according to some embodiments;
FIG. 14 is a block diagram illustrating another information transmission apparatus according to some embodiments;
FIG. 15 is a block diagram illustrating another information transmission apparatus according to some embodiments;
FIG. 16 is a block diagram illustrating an information transmission apparatus according to some embodiments;
FIG. 17 is a block diagram illustrating another information transmission apparatus according to some embodiments;
FIG. 18 is a block diagram illustrating another information transmission apparatus according to some embodiments;
FIG. 19 is a block diagram illustrating another information transmission apparatus according to some embodiments;
FIG. 20 is a block diagram illustrating another information transmission apparatus according to some embodiments;
FIG. 21 is a block diagram illustrating another information transmission apparatus according to some embodiments;
FIG. 22 is a block diagram illustrating another information transmission apparatus according to some embodiments;
FIG. 23 is a structural schematic diagram illustrating an information transmission apparatus according to some embodiments;
FIG. 24 is a structural schematic diagram illustrating an information transmission apparatus according to some embodiments.

### DETAILED DESCRIPTION OF THE EMBODIMENTS

Examples will be described in detail here with the examples thereof expressed in the drawings. Where the following descriptions involve the drawings, like numerals in different drawings refer to like or similar elements unless otherwise indicated. The embodiments described in the following examples do not represent all embodiments consistent with the present disclosure. Rather, they are merely examples of apparatuses and methods consistent with some aspects of the present disclosure as detailed in the appended claims.

The term used in the present disclosure is for the purpose of describing particular examples only and is not intended to limit the present disclosure. As used in this disclosure and the appended claims, the singular forms "a", "an" and "the" are intended to include the plural forms as well, unless the context clearly indicates otherwise. It should also be understood that the term "and/or" as used herein refers to and includes any and all possible combinations of one or more of the associated listed items.

It shall be understood that, although the terms "first," "second," "third," and the like may be used herein to describe various information, the information should not be limited by these terms. These terms are only used to distinguish one category of information from another. For example, without departing from the scope of the present disclosure, indication information may be referred as second information; and similarly, second information may also be referred as indication information. As used herein, the term "if' may be interpreted as "when" or "upon" or "in response to determining" depending on the context.

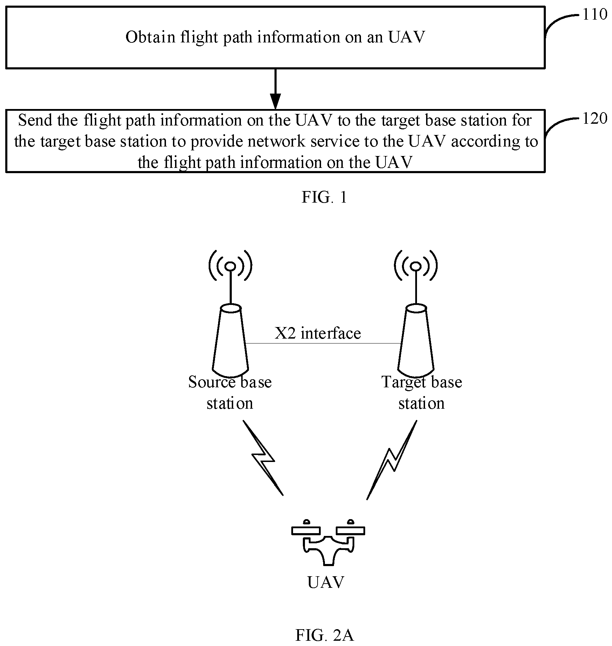

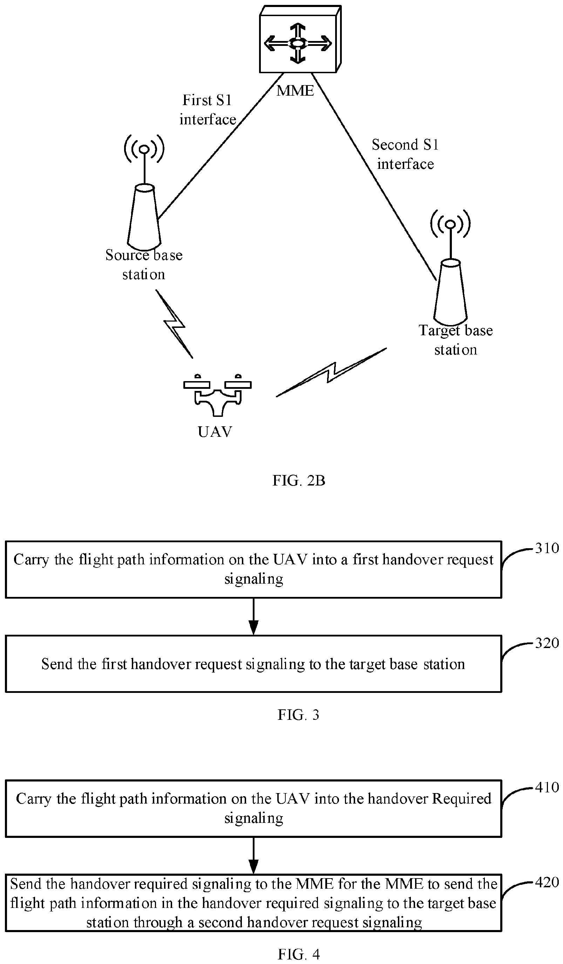

FIG. 1 is a flowchart illustrating an information transmission method according to some embodiments. FIG. 2A and FIG. 2B are both application scene diagrams illustrating information transmission methods according to some embodiments. The information transmission method is applicable to a source base station that currently provides network service to an UAV. As shown in FIG. 1, the information transmission method may include steps 110-120.

At step 110, flight path information on an UAV is obtained.

In the embodiments of the present disclosure, after the source base station obtains the flight path information on the UAV, in addition to predicting which base station the UAV may pass through, the source base station can also notify a target base station of the flight path information during cell handover, so that the target base station can also predict which base station the UAV may pass through, thereby providing better network service to the UAV.

In addition, there are many ways for the source base station to obtain the flight path information on the UAV. It can be that the UAV actively reports the flight path information to the source base station or the source base station obtains the flight path information on the UAV from a core network device.

At step 120, the flight path information on the UAV is sent to the target base station for the target base station to provide network service to the UAV according to the flight path information on the UAV.

In the embodiments of the present disclosure, after the target base station obtains the flight path information on the UAV, the target base station can also predict which base station the UAV may pass through according to the flight path information on the UAV.

In an embodiment, during the cell handover, performing step 120 may include:
(1-1) receiving a measurement report sent by the UAV;
(1-2) in response to determining to prepare for handover with the target base station according to the measurement report, sending the flight path information on the UAV to the target base station.

In an example application scenario, as shown in FIG. 2A, the application scenario includes a UAV, a source base station, and a target base station. The source base station is connected with the target base station through X2 interface. After the source base station obtains the flight path information on the UAV, the base station may send the flight path information to the target base station through the X2 interface, so that the target base station can provide network service to the UAV based on the flight path information on the UAV. The X2 interface is an interconnection interface between base stations and supports direct transmission of data and signaling.

In an example application scenario, as shown in FIG. 2B, the application scenario includes an UAV, a source base station, a mobility management entity (MME), and a target base station. The source base station is connected with the MME through a first S1 interface, and the MME is connected with the target base station through a second S1 interface. After the source base station obtains the flight path information on the UAV, the source base station can send the flight path information to the MME through the first S 1 interface for the MME to send the flight path information to the target base station through the second S1 interface, so that the target base station can provide network service to the UAV based on the flight path information on the UAV. The S1 interface is the communication interface between the base station and the MME.

It can be seen from the above embodiment that by collecting the flight path information on the UAV, and sending the flight path information on the UAV to the target base station, the target base station can provide network service to the UAV based on the flight path information on the UAV, which realizes the function of transmitting the flight path information on the UAV between base stations, and also improves the service quality of the target base station.

FIG. 3 is a flowchart illustrating another information transmission method according to some embodiments. The information transmission method may be applied in a source base station that currently provides network service to an UAV, and the method is based on the method shown in FIG. 1, the source base station is connected with the target base station through the X2 interface; as shown in FIG. 3, upon performing step 120, the following steps 310-320 may be included.

At step 310, the flight path information on the UAV is carried into a first handover request signaling.

In the embodiments of the present disclosure, the source base station may notify the target base station of the flight path information on the UAV through the first handover request signaling. For example, the source base station carries the flight path information on the UAV into a designated location or designated element of the first handover request signaling, so that the target base station can obtain the flight path information from the first handover request signaling.

In an embodiment, upon performing step 310, the following implementations can be adopted but not limited to:
Method 1: Modify an X2AP (X2 access point) signaling directly. In this way, the method includes:
   (2-1) Adding a flight path information element for carrying the flight path information in the first handover request signaling. The flight path information element is a newly added information element.
   (2-2) Carrying the flight path information into the flight path information element.
Method 2: Modify a radio resource control (RRC) signaling. In this way, the method includes:
   (3-1) Adding a flight path information element for carrying the flight path information in the terminal assistance signaling, and carrying the flight path information into the flight path information element;
   (3-2) Adding the terminal assistance signaling to the handover preparation signaling;
   (3-3) Carrying the handover preparation signaling into a first designated element in a first handover request signaling, where the first designated element is an RRC context information element.

At step 320, the first handover request signaling is sent to the target base station.

It can be seen from the above embodiments that the flight path information on the UAV is carried into the first handover request signaling, and the first handover request signaling is sent to the target base station, thereby meeting the information transmission requirements based on the X2 interface, and improving the accuracy and efficiency of information transmission.

FIG. 4 is a flowchart illustrating another information transmission method according to some embodiments. The information transmission method may be applied in a source base station that currently provides network service to an UAV, and the method is based on the method shown in FIG. 1, the source base station is connected with the MME through the first S1 interface, and the MME is connected with the target base station through the second S1 interface; as shown in FIG. 4, upon performing step 120 is performed, the following steps 410-420 may be included.

At step 410, the flight path information on the UAV is carried into a handover required signaling.

In the embodiments of the present disclosure, the source base station may notify the MME of the flight path information on the UAV through the handover required signaling, and then the MME notifies the target base station of the flight path information on the UAV through the second handover request signaling. For example, the source base station carries the flight path information on the UAV into a designated location or a designated element in the handover required signaling, so that the MME can obtain the flight path information from the handover required signaling, and then carries the flight path information into a second handover request signaling, and send the second handover request signaling to the target base station. In this way the target base station may learn the flight path information on the UAV sent by the source base station through the MME.

In an embodiment, upon performing step 410, the following implementation can be adopted but not limited to:
(4-1) Adding a flight path information element for carrying the flight path information in the handover required signaling. The flight path information element is a newly added information element.
(4-2) Carrying the flight path information into the flight path information element.

In an embodiment, upon performing step 410, the following implementation can be adopted but not limited to:
(5-1) Adding a flight path information element for carrying the flight path information in a terminal assistance signaling, and carrying the flight path information into the flight path information element;
(5-2) Adding the terminal assistance signaling to a handover preparation signaling;
(5-3) Carrying the handover preparation signaling into a second designated element in the handover required signaling, where the second designated element is a source to target base station transparent container information element.

At step 420, the handover required signaling is sent to the MME for the MME to send the flight path information in the handover required signaling to the target base station through a second handover request signaling.

It can be seen from the above embodiment that the flight path information on the UAV is carried into the handover required signaling, and the handover required signaling is sent to the MME for the MME to send the flight path information in the handover required signaling to the target base station through the second handover request signaling, thereby meeting the information transmission requirements based on the S1 interface, and also improving the accuracy and efficiency of information transmission.

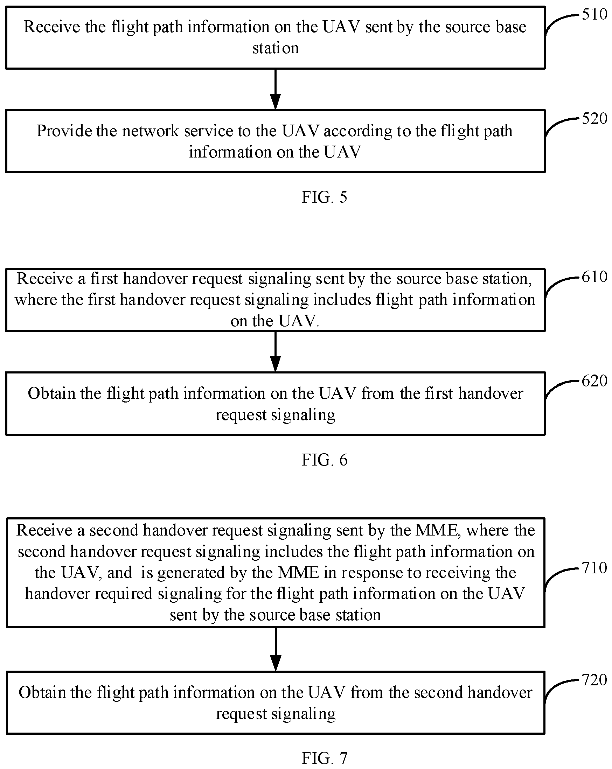

FIG. 5 is a flowchart illustrating an information transmission method according to some embodiments. The information transmission method may be applied in a target base station. As shown in FIG. 5, the information transmission method may include the following steps 510-520.

At step 510, the flight path information on the UAV sent by the source base station is received.

In the embodiments of the present disclosure, after the target base station receives the flight path information on the UAV sent by the source base station, the target base station can predict which base station the UAV may pass through, so as to provide better network service to the UAV.

At step 520, the network service is provided to the UAV according to the flight path information on the UAV.

It can be seen from the above embodiment that the flight path information on the UAV sent by the source base station is received, and the network service is provided to the UAV according to the flight path information on the UAV, thereby realizing transmission of the flight path information on the UAV between the base stations and improving the service quality of the target base station.

FIG. 6 is a flowchart illustrating another information transmission method according to some embodiments. The information transmission method may be applied in a target base station and the method is based on the method shown in FIG. 5. The source station is connected with the target base station through an X2 interface (refer to the application scenario shown in FIG. 2A); as shown in FIG. 6, upon performing step 510, the following steps 610-620 may be included.

At step 610, a first handover request signaling sent by the source base station is received, where the first handover request signaling includes flight path information on the UAV.

At step 620, the flight path information on the UAV is obtained from the first handover request signaling.

In the embodiments of the present disclosure, since the source base station may use different methods to carry the flight path information on the UAV into the first handover request signaling, when the target base station obtains the flight path information on the UAV, the target base station also needs to obtain the flight path information on the UAV using an obtaining method corresponding to the adding method.

In an embodiment, the first handover request signaling includes a flight path information element for carrying flight path information on the UAV; upon performing step 620, the flight path information is obtained from the flight path information element included in the first handover request signaling.

In an embodiment, the first handover request signaling includes a first designated element, and the first designated element is an RRC context information element; the RRC context information element includes a handover preparation signaling, the handover preparation signaling includes a terminal assistance signaling, and the terminal assistance signaling includes a flight path information element for carrying the flight path information; upon performing step 620, the flight path information may be obtained from the flight path information element included in the terminal assistance signaling.

It can be seen from the above embodiment that the first handover request signaling sent by the source base station is received, where the first handover request signaling includes flight path information on the UAV, and the flight path information on the UAV is obtained from the first handover request signaling, thereby realizing information transmission based on the X2 interface and improving the accuracy and efficiency of information transmission.

FIG. 7 is a flowchart illustrating another information transmission method according to some embodiments. The information transmission method may be applied in a target base station. The method is based on the method shown in FIG. 5. The source base station is connected with the MME through a first S1 interface and the MME is connected with the target base station through a second S1 interface (refer to the application scenario shown in FIG. 2B); as shown in FIG. 7, upon performing step 510, the following steps 710-720 may be included:
At step 710, a second handover request signaling sent by the MME is received, where the second handover request signaling includes the flight path information on the UAV, and the second handover request signaling is generated after the MME receives the handover required signaling for the flight path information on the UAV sent by the source base station.

At step 720, the flight path information on the UAV is obtained from the second handover request signaling.

In the embodiments of the present disclosure, since the MME may use different methods to carry the flight path information on the UAV into the second handover request signaling, when the target base station obtains the flight path information on the UAV, the target base station also needs to obtain the flight path information on the UAV using an obtaining method corresponding to the adding method.

For example, after the MME receives the handover required signaling sent by the source base station, and the handover required signaling includes the flight path information element for carrying the flight path information on the UAV, the MME may obtain the flight path information from the flight path information element included in the handover required signaling, add the flight path information element for carrying the flight path information to the second handover request signaling, and carry the flight path information the flight path information element included in the second handover request signaling correspondingly:
In an embodiment, the second handover request signaling includes a flight path information element for carrying the flight path information; upon performing step 720, the flight path information may be obtained from the flight path information element included in the second handover request signaling.

For another example, the MME receives the handover required signaling sent by the source base station, and the handover required signaling includes a second designated element, and the second designated element is a source to target base station transparent container information element. The second designated element includes a handover preparation signaling, the handover preparation signaling includes a terminal assistance signaling. The MME may directly add the handover preparation signaling including the flight path information to the source to target base station transparent container information element included in the second handover request signaling. Correspondingly:
In an embodiment, the second handover request signaling includes a second designated element, and the second designated element is a source to target base station transparent container information element. The second designated element includes a handover preparation signaling, the handover preparation signaling includes a terminal assistance signaling. The terminal assistance signaling includes a flight path information element for carrying the flight path information. Upon performing step 720, the flight path information may be obtained from the flight path information element included in the terminal assistance signaling.

It can be seen from the above embodiments that a second handover request signaling sent by the MME is received, where the second handover request signaling includes the flight path information on the UAV, and the flight path information on the UAV is obtained from the second handover request signaling, hereby realizing information transmission based on the S1 interface and improving the accuracy and efficiency of information transmission.

Corresponding to the embodiments of information transmission methods, the present disclosure also provides embodiments of information transmission apparatuses.

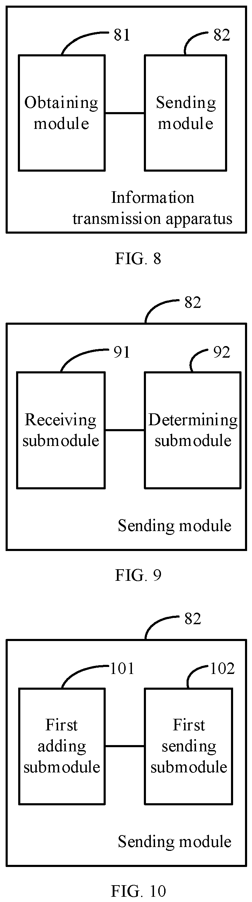

FIG. 8 is a block diagram illustrating an information transmission apparatus according to some embodiments. The information transmission apparatus may be applied in a source base station that currently provides network service to an UAV and used for executing the information transmission method shown in FIG. 1. As shown in FIG .8, the information transmission apparatus may include:
an obtaining module 81, configured to obtain flight path information on an UAV;
a sending module 82, configured to send the flight path information to a target base station for the target base station to provide network service to the UAV according to the flight path information.

It can be seen from the above embodiment that by collecting the flight path information on the UAV, and sending the flight path information on the UAV to the target base station, the target base station can provide network service to the UAV based on the flight path information on the UAV, which realizes the function of transmitting the flight path information on the UAV between base stations, and also improves the service quality of the target base station.

In an embodiment, based on the apparatus shown in FIG. 8, as shown in FIG. 9, the sending module 82 may include:
a receiving submodule 91, configured to receive a measurement report sent by the UAV;
a determining submodule 92, configured to, in response to determining to prepare for handover with the target base station according to the measurement report, send the flight path information on the UAV to the target base station.

In one embodiment, based on the apparatus shown in FIG. 8, as shown in FIG. 10, the sending module 82 may include:
a first adding submodule 101, configured to carry the flight path information into a first handover request signaling;
a first sending submodule 102, configured to send the first handover request signaling to the target base station.

It can be seen from the above embodiment that the flight path information on the UAV is carried into the first handover request signaling, and the first handover request signaling is sent to the target base station, thereby meeting the information transmission requirements based on the X2 interface, and improving the accuracy and efficiency of information transmission.

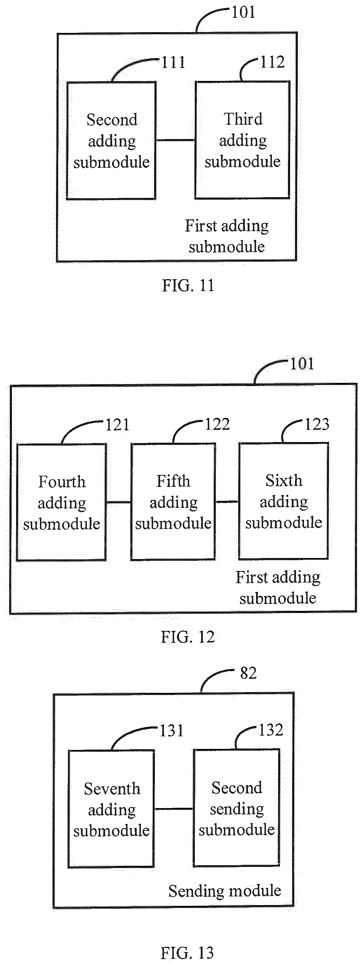

In an embodiment, based on the apparatus shown in FIG. 10, as shown in FIG. 11,the first adding submodule 101 may include:
a second adding submodule 111, configured to add a flight path information element for carrying the flight path information in the first handover request signaling;
a third adding submodule 112, configured to carry the flight path information into the flight path information element.

In an embodiment, based on the apparatus shown in FIG. 10, as shown in FIG. 12, the first adding submodule 101 may include:
a fourth adding submodule 121, configured to add a flight path information element for carrying the flight path information in a terminal assistance signaling, and carry the flight path information into the flight path information element;
a fifth adding submodule 122, configured to add the terminal assistance signaling to a handover preparation signaling;
a sixth adding submodule 123, configured to carry the handover preparation signaling into a first designated element in the first handover request signaling, and the first designated element is a RRC context information element.

In an embodiment, based on the apparatus shown in FIG. 8, as shown in FIG. 13, the sending module 82 may include:
a seventh adding submodule 131, configured to carry the flight path information into a handover required signaling;
a second sending submodule 132, configured to send the handover required signaling to the MME for the MME to send the flight path information in the handover required signaling to the target base station through the second handover request signaling.

It can be seen from the above embodiment that the flight path information on the UAV is carried into the handover required signaling, and the handover required signaling is sent to the MME for the MME to send the flight path information in the handover required signaling to the target base station through the second handover request signaling, thereby meeting the information transmission requirements based on the S1 interface, and also improving the accuracy and efficiency of information transmission.

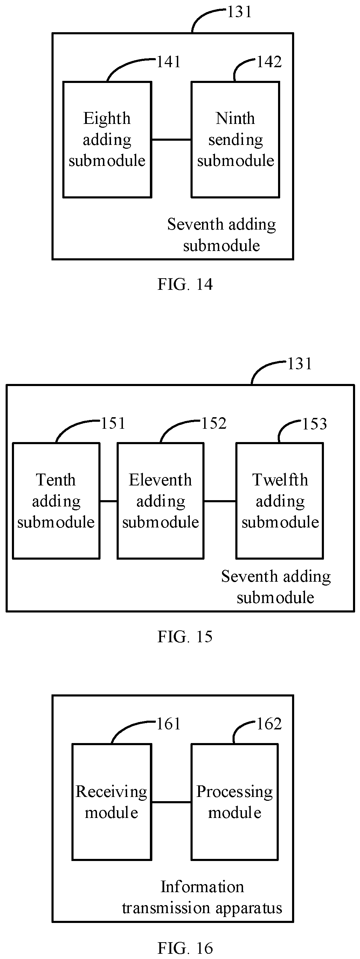

In an embodiment, based on the apparatus shown in FIG. 13, as shown in FIG. 14,the seventh adding submodule 131 may include:
an eighth adding submodule 141, configured to add a flight path information element for carrying the flight path information in the handover required signaling;
a ninth adding submodule 142, configured to carry the flight path information into the flight path information element.

In an embodiment, based on the apparatus shown in FIG. 13, as shown in FIG. 15, the seventh adding submodule 131 may include:
a tenth adding submodule 151, configured to add a flight path information element for carrying the flight path information in the terminal assistance signaling, and carry the flight path information into the flight path information element;
an eleventh adding submodule 152, configured to add the terminal assistance signaling to the handover preparation signaling;
a twelfth adding submodule 153, configured to carry the handover preparation signaling into a second designated element in the handover required signaling, and the second designated element is a source to target base station transparent container information element.

FIG. 16 is a block diagram illustrating an information transmission apparatus according to some embodiments. The information transmission apparatus may be applied in a target base station and used for executing the information transmission method shown in FIG. 5. As shown in FIG. 16, the information transmission apparatus may include:
a receiving module 161, configured to receive flight path information on an UAV sent by a source base station;
a processing module 162, configured to provide network service to the UAV according to the flight path information.

It can be seen from the above embodiment that the flight path information on the UAV sent by the source base station is received, and the network service is provided to the UAV according to the flight path information on the UAV, thereby realizing transmission of the flight path information on the UAV between the base stations and improving the service quality of the target base station.

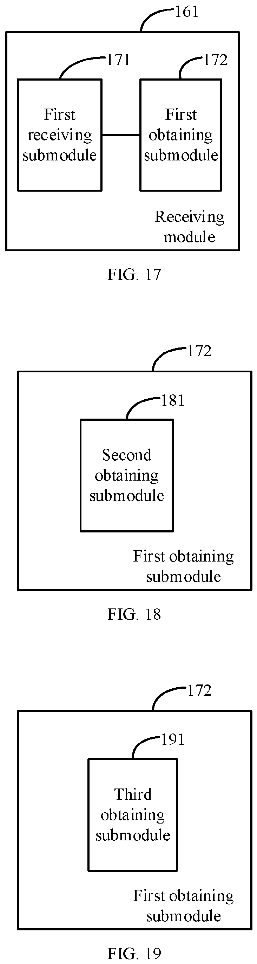

In an embodiment, based on the apparatus shown in FIG.16, as shown in FIG. 17, the receiving module 161 may include:
a first receiving submodule 171, configured to receive a first handover request signaling sent by the source base station, where the first handover request signaling includes the flight path information on the UAV;
a first obtaining submodule 172, configured to obtain the flight path information from the first handover request signaling.

It can be seen from the above embodiment that the first handover request signaling sent by the source base station is received, where the first handover request signaling includes flight path information on the UAV, and the flight path information on the UAV is obtained from the first handover request signaling, thereby realizing information transmission based on the X2 interface and improving the accuracy and efficiency of information transmission.

In an embodiment, based on the apparatus shown in FIG. 17, as shown in FIG. 18, the first handover request signaling includes a flight path information element for carrying the flight path information, the first obtaining submodule 172 may include:
a second obtaining submodule 181, configured to obtain the flight path information from the flight path information element included in the first handover request signaling.

In an embodiment, based on the apparatus shown in FIG. 17, as shown in FIG. 19, the first handover request signaling includes a first designated element, and the first designated element is an RRC context information element; the RRC context information element includes a handover preparation signaling, the handover preparation signaling includes a terminal assistance signaling, and the terminal assistance signaling includes a flight path information element for carrying the flight path information; the first obtaining submodule 172 may include:
a third obtaining submodule 191, configured to obtain the flight path information from the flight path information element included in the terminal assistance signaling.

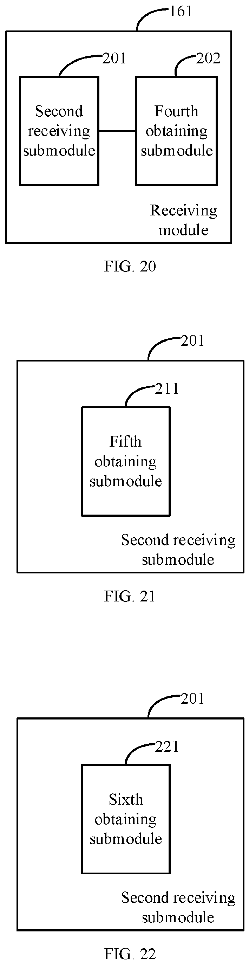

In an embodiment, based on the apparatus shown in FIG. 16, as shown in FIG. 20, the receiving module 161 may include:
a second receiving submodule 201, configured to receive a second handover request signaling sent by the MME, the second handover request signaling includes the flight path information, and the second handover request signaling is generated by the MME in response to receiving the handover required signaling which carries the flight path information sent by the source base station;
a fourth obtaining submodule 202, configured to obtain the flight path information from the second handover request signaling.

It can be seen from the above embodiments that a second handover request signaling sent by the MME is received, where the second handover request signaling includes the flight path information on the UAV, and the flight path information on the UAV is obtained from the second handover request signaling, hereby realizing information transmission based on the S1 interface and improving the accuracy and efficiency of information transmission.

In an embodiment, based on the apparatus shown in FIG. 20, as shown in FIG. 21, the second handover request signaling includes a flight path information element for carrying the flight path information; the second receiving submodule 201 may include:
a fifth obtaining submodule 211, configured to obtain the flight path information from the flight path information element included in the second handover request signaling.

In an embodiment, based on the apparatus shown in FIG. 20, as shown in FIG. 22, the second handover request signaling includes a second designated element, the second designated element is a source to target base station transparent container information element; the second designated element includes a handover preparation signaling, the handover preparation signaling includes a terminal assistance signaling, and the terminal assistance signaling includes a flight path information element for carrying the flight path information; the second receiving submodule 201 may include:
a sixth obtaining submodule 221, configured to obtain the flight path information from the flight path information element included in the terminal assistance signaling.

Since the device examples substantially correspond to the method examples, a reference may be made to part of the descriptions of the method examples for the related part. The device examples described above are merely illustrative, where above units described as separate members may be or not be physically separated, and the members displayed as units may be or not be physical units, i.e., may be located in one place, or may be distributed to a plurality of network units. Part or all of the modules may be selected according to actual requirements to implement the objectives of the solutions in the examples. Those of ordinary skill in the art may understand and carry out them without creative work.

Also described is a non-transitory computer-readable storage medium storing a computer program thereon, wherein the computer program is used to execute the information transmission method described in any one of FIGS. 1 to 4.

Also described is a non-transitory computer-readable storage medium storing a computer program thereon, wherein the computer program is used to execute the information transmission method described in any one of FIGS. 5 to 7.

Also described is an information transmission apparatus, which is applied in a source base station that currently provides network service to an UAV, and the apparatus includes:
a processor;
a memory for storing instructions executable by the processor;
wherein, the processor is configured to:
obtain flight path information on an UAV;
send the flight path information to a target base station for the target base station to provide network service to the UAV according to the flight path information.

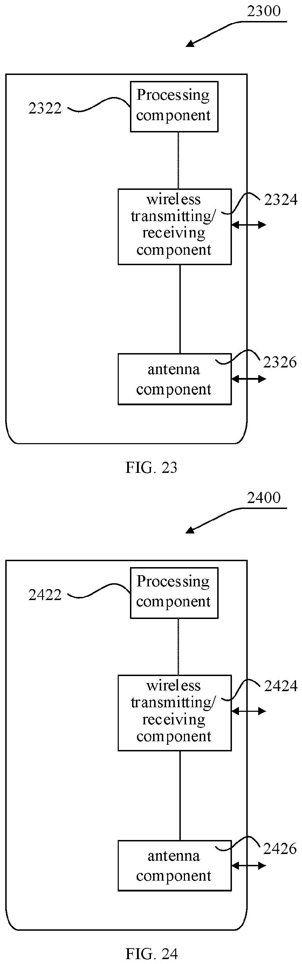

As shown in FIG. 23, FIG. 23 is a structural schematic diagram illustrating an information transmission apparatus according to some embodiments. An apparatus 2300 may be provided as a source base station. Referring to FIG. 23, the apparatus 2300 includes a processing component 2322, a wireless transmitting/receiving component 2324, an antenna component 2326, and a signal processing portion specific to a wireless interface. The processing component 2322 may further include one or more processors.

One the processor of the processing component 2322 may be configured to execute any of the foregoing information transmission methods.

Also described is an information transmission apparatus, which is applied in a target base station, and the apparatus includes:
a processor;
a memory for storing instructions executable by the processor; wherein, the processor is configured to:
   receive the flight path information on an UAV sent by a source base station;
   provide network service to the UAV according to the flight path information.

As shown in FIG. 24, for background explanation purposes, FIG. 24 is a structural schematic diagram illustrating an information transmission apparatus according to some embodiments. An apparatus 2400 may be provided as a source base station. Referring to FIG. 24, the apparatus 2400 includes a processing component 2422, a wireless transmitting/receiving component 2424, an antenna component 2426, and a signal processing portion specific to a wireless interface. The processing component 2422 may further include one or more processors.

One the processor of the processing component 2422 may be configured to execute any of the foregoing information transmission methods.

It is to be understood that this disclosure is not limited to the above described structures shown in the drawings, and various changes and modifications can be made to the disclosure without departing from the scope of invention as defined by the appended claims.

## Claims

1. An information transmission method, being applicable to a source base station that currently provides network service to an unmanned aerial vehicle, UAV, comprising:
obtaining (110) flight path information on the UAV;
sending (120) the flight path information to a target base station for the target base station to provide network service to the UAV according to the flight path information;
wherein sending the flight path information to the target base station comprises:
receiving a measurement report sent by the UAV;
in response to determining to prepare for a handover with the target base station according to the measurement report, sending the flight path information on the UAV to the target base station;
wherein the source base station is connected with the target base station through an X2 interface, and sending the flight path information to the target base station comprises:
carrying (310) the flight path information into a first handover request signaling; and
sending (320) the first handover request signaling to the target base station, and
wherein carrying the flight path information into the first handover request signaling comprises:
adding a flight path information element for carrying the flight path information in a terminal assistance signaling;
carrying the flight path information into the flight path information element;
adding the terminal assistance signaling to a handover preparation signaling; and
carrying the handover preparation signaling into a first designated element in the first handover request signaling, wherein the first designated element is a radio resource control, RRC, context information element.

2. An information transmission method, being applicable to a source base station that currently provides network service to an unmanned aerial vehicle, UAV, comprising:
obtaining (110) flight path information on the UAV;
sending (120) the flight path information to a target base station for the target base station to provide network service to the UAV according to the flight path information;
wherein sending the flight path information to the target base station comprises:
receiving a measurement report sent by the UAV;
in response to determining to prepare for a handover with the target base station according to the measurement report, sending the flight path information on the UAV to the target base station;
wherein the source base station is connected with a mobility management entity, MME, through a first S1 interface, the MME is connected with the target base station through a second S1 interface, and sending the flight path information to the target base station comprises:
carrying (410) the flight path information into a handover required signaling;
sending (420) the handover required signaling to the MME for the MME to send the flight path information in the handover required signaling to the target base station through a second handover request signaling;
wherein carrying the flight path information into the handover required signaling comprises:
adding a flight path information element for carrying the flight path information in a terminal assistance signaling;
carrying the flight path information into the flight path information element;
adding the terminal assistance signaling to a handover preparation signaling; and
carrying the handover preparation signaling into a second designated element in the handover required signaling, wherein the second designated element is a source to target base station transparent container information element.

3. An information transmission method, being applicable to a target base station, comprising:
receiving (510) flight path information on an unmanned aerial vehicle, UAV, sent by a source base station;
providing (520) network service to the UAV according to the flight path information;
wherein the source base station is connected with the target base station through an X2 interface, and receiving the flight path information on the UAV sent by the source base station comprises:
receiving (610) a first handover request signaling sent by the source base station, wherein the first handover request signaling comprises the flight path information on the UAV;
obtaining (620) the flight path information from the first handover request signaling;
wherein the first handover request signaling comprises a first designated element, the first designated element is a radio resource control, RRC, context information element comprising a handover preparation signaling, the handover preparation signaling comprises a terminal assistance signaling comprising a flight path information element for carrying the flight path information, and obtaining the flight path information from the first handover request signaling comprises:
obtaining the flight path information from the flight path information element comprised in the terminal assistance signaling.

4. An information transmission method, being applicable to a target base station, comprising:
receiving (510) flight path information on an unmanned aerial vehicle, UAV, sent by a source base station;
providing (520) network service to the UAV according to the flight path information;
wherein the source base station is connected with a mobility management entity, MME, through a first S1 interface, the MME is connected with the target base station through a second S1 interface, and receiving the flight path information on the UAV sent by the source base station comprises:
receiving (710) a second handover request signaling sent by the MME, wherein the second handover request signaling comprises the flight path information and is generated by the MME in response to receiving a handover required signaling which carries the flight path information sent by the source base station;
obtaining (720) the flight path information from the second handover request signaling;
wherein the second handover request signaling comprises a second designated element, the second designated element is a source to target base station transparent container information element comprising a handover preparation signaling, the handover preparation signaling comprises a terminal assistance signaling comprising a flight path information element for carrying the flight path information, and obtaining the flight path information from the second handover request signaling comprises:
obtaining the flight path information from the flight path information element comprised in the terminal assistance signaling.

5. An information transmission apparatus, being applicable to a source base station that currently provides network service to an unmanned aerial vehicle, UAV, comprising:
an obtaining module (81), configured to obtain flight path information on the UAV;
a sending module (82), configured to send the flight path information to a target base station for the target base station to provide network service to the UAV according to the flight path information;
wherein the sending module comprises:
a receiving submodule (91), configured to receive a measurement report sent by the UAV;
a determining submodule (92), configured to, in response to determining to prepare for a handover with the target base station according to the measurement report, send the flight path information on the UAV to the target base station;
wherein the source base station is connected with the target base station through an X2 interface; and the sending module comprises:
a first adding submodule (101), configured to carry the flight path information into a first handover request signaling;
a first sending submodule (102), configured to send the first handover request signaling to the target base station;
wherein the first adding submodule comprises:
a fourth adding submodule (121), configured to add a flight path information element for carrying the flight path information in a terminal assistance signaling, and carry the flight path information into the flight path information element;
a fifth adding submodule (122), configured to add the terminal assistance signaling to a handover preparation signaling;
a sixth adding submodule (123), configured to carry the handover preparation signaling into a first designated element in the first handover request signaling, and the first designated element is a radio resource control, RRC, context information element.

6. An information transmission apparatus, being applicable to a source base station that currently provides network service to an unmanned aerial vehicle, UAV, comprising:
an obtaining module (81), configured to obtain flight path information on the UAV;
a sending module (82), configured to send the flight path information to a target base station for the target base station to provide network service to the UAV according to the flight path information;
wherein the sending module comprises:
a receiving submodule (91), configured to receive a measurement report sent by the UAV;
a determining submodule (92), configured to, in response to determining to prepare for a handover with the target base station according to the measurement report, send the flight path information on the UAV to the target base station;
wherein the source base station is connected with a mobility management entity, MME, through a first S1 interface, and the MME is connected with the target base station through a second S1 interface; and the sending module comprises:
a seventh adding submodule (131), configured to carry the flight path information into a handover required signaling;
a second sending submodule (132), configured to send the handover required signaling to the MME for the MME to send the flight path information in the handover required signaling to the target base station through a second handover request signaling;
wherein the seventh adding submodule comprises:
a tenth adding submodule (151), configured to add a flight path information element for carrying the flight path information in the terminal assistance signaling, and carry the flight path information into the flight path information element;
an eleventh adding submodule (152), configured to add the terminal assistance signaling to the handover preparation signaling;
a twelfth adding submodule (153), configured to carry the handover preparation signaling into a second designated element in the handover required signaling, wherein the second designated element is a source to target base station transparent container information element.

7. An information transmission apparatus, being applicable to a target base station, comprising:
a receiving module (161), configured to receive flight path information on an unmanned aerial vehicle, UAV, sent by a source base station;
a processing module (162), configured to provide network service to the UAV according to the flight path information;
wherein the source base station is connected with the target base station through an X2 interface; and the receiving module comprises:
a first receiving submodule (171), configured to receive a first handover request signaling sent by the source base station, where the first handover request signaling includes the flight path information on the UAV;
a first obtaining submodule (172), configured to obtain the flight path information from the first handover request signaling;
wherein the first handover request signaling comprises a first designated element, and the first designated element is a radio resource control (RRC) context information element comprising a handover preparation signaling, the handover preparation signaling comprises a terminal assistance signaling comprising a flight path information element for carrying the flight path information; and the first obtaining submodule comprises:
a third obtaining submodule (191), configured to obtain the flight path information from the flight path information element comprised in the terminal assistance signaling.

8. An information transmission apparatus, being applicable to a target base station, comprising:
a receiving module (161), configured to receive flight path information on an unmanned aerial vehicle, UAV, sent by a source base station;
a processing module (162), configured to provide network service to the UAV according to the flight path information;
wherein the source base station is connected with a mobility management entity, MME, through a first S1 interface, and the MME is connected with the target base station through a second S1 interface; and the receiving module comprises:
a second receiving submodule (201), configured to receive a second handover request signaling sent by the MME, wherein the second handover request signaling comprises the flight path information and is generated by the MME in response to receiving a handover required signaling which carries the flight path information sent by the source base station;
a fourth obtaining submodule (202), configured to obtain the flight path information from the second handover request signaling;
wherein the second handover request signaling comprises a second designated element, the second designated element is a source to target base station transparent container information element comprising a handover preparation signaling, the handover preparation signaling comprises a terminal assistance signaling comprising a flight path information element for carrying the flight path information; and the second obtaining submodule comprises:
a sixth obtaining submodule (221), configured to obtain the flight path information from the flight path information element comprised in the terminal assistance signaling.

## Patentansprüche

1. Ein Informationsübertragungsverfahren, das auf eine Quellbasisstation anwendbar ist, die gegenwärtig einen Netzdienst für ein unbemanntes Luftfahrzeug (UAV) bereitstellt, umfassend:
Beschaffung (110) von Flugweginformationen über das UAV;
Senden (120) der Flugweginformationen an eine Zielbasisstation, damit die Zielbasisstation dem UAV gemäß den Flugweginformationen einen Netzdienst zur Verfügung stellt;
wobei das Senden der Flugweginformationen an die Zielbasisstation umfasst:
Empfang eines vom UAV gesendeten Messberichts;
als Reaktion auf die Feststellung, dass ein Handover bzw. eine Übergabe mit der Zielbasisstation gemäß dem Messbericht vorbereitet werden soll, Senden der Flugweginformationen über das UAV an die Zielbasisstation;
wobei die Quellbasisstation mit der Zielbasisstation über eine X2-Schnittstelle verbunden ist, und das Senden der Flugweginformation an die Zielbasisstation umfasst:
Übertragen (310) der Flugweginformationen in eine erste Handoveranforderungssignalisierung; und
Senden (320) der ersten Handoveranforderungssignalisierung an die Zielbasisstation, und
wobei das Übertragen der Flugweginformationen in die erste Handoveranforderungssignalisierung umfasst:
Hinzufügen eines Flugweginformations-Elements zum Übertragen der Flugweginformationen in eine Terminal-Assistenzsignalisierung;
Übertragung der Flugweginformationen in das Flugweginformationselement;
Hinzufügen der Terminal-Assistenzsignalisierung zu einer Handovervorbereitungssignalisierung; und
Übertragen der Handovervorbereitungssignalisierung in ein erstes bestimmtes Element in der ersten Handoveranforderungssignalisierung, wobei das erste bestimmte Element ein RRC-Kontextinformationselement (Radio Resource Control) ist.

2. Ein Informationsübertragungsverfahren, das auf eine Quellbasisstation anwendbar ist, die gegenwärtig einen Netzdienst für ein unbemanntes Luftfahrzeug (UAV) bereitstellt, umfassend:
Beschaffung (110) von Flugweginformationen über das UAV;
Senden (120) der Flugweginformationen an eine Zielbasisstation, damit die Zielbasisstation dem UAV gemäß den Flugweginformationen einen Netzdienst zur Verfügung stellt;
wobei das Senden der Flugweginformationen an die Zielbasisstation umfasst:
Empfang eines vom UAV gesendeten Messberichts;
als Reaktion auf die Feststellung, dass ein Handover mit der Zielbasisstation gemäß dem Messbericht vorbereitet werden soll, Senden der Flugweginformationen über das UAV an die Zielbasisstation;
wobei die Quellbasisstation mit einer Mobilitätsmanagement-Einheit, MME, über eine erste S1-Schnittstelle verbunden ist, die MME mit der Zielbasisstation über eine zweite S1-Schnittstelle verbunden ist, und das Senden der Flugweg-Information an die Zielbasisstation umfasst:
Übertragung (410) der Flugweginformationen in eine für das Handover erforderliche Signalisierung bzw. Handoveranforderungssignalisierung;
Senden (420) der Handoveranforderungssignalisierung an den MME, damit der MME die Flugweginformationen in der Handoveranforderungssignalisierung über eine zweite Handoveranforderungssignalisierung an die Zielbasisstation sendet;
wobei die Übertragung der Flugweginformationen in die Handoveranforderungssignalisierungumfasst:
Hinzufügen eines Flugweginformations-Elements zum Übertragen der Flugweginformationen in eine Terminal-Assistenzsignalisierung;
Übertragung der Flugweginformationen in das Flugweginformationselement;
Hinzufügen der Terminal-Assistenzsignalisierung zu einer Handovervorbereitungssignalisierung; und
Übertragen der Handovervorbereitungssignalisierung in ein zweites bezeichnetes Element in der für die Handover erforderlichen Signalisierung, wobei das zweite bezeichnete Element ein Element mit transparenten Containerinformationen von der Quelle zur Zielbasisstation ist.

3. Ein Informationsübertragungsverfahren, das auf eine Zielbasisstation anwendbar ist, umfassend:
Empfang (510) von Flugweginformationen über ein unbemanntes Luftfahrzeug (UAV), die von einer Quellbasisstation gesendet werden;
Bereitstellung (520) eines Netzdienstes für das UAV gemäß den Flugweginformationen;
wobei die Quellbasisstation mit der Zielbasisstation über eine X2-Schnittstelle verbunden ist, und das Empfangen der von der Quellbasisstation gesendeten Flugweginformationen über das UAV umfasst:
Empfangen (610) einer ersten Handoveranforderungssignalisierung, die von der Quellbasisstation gesendet wird, wobei die erste Handoveranforderungssignalisierung die Flugweginformationen über das UAV umfasst;
Erhalten (620) der Flugweginformationen aus der ersten Handoveranforderungssignalisierung;
wobei die erste Handoveranforderungssignalisierung ein erstes bezeichnetes Element umfasst, das erste bezeichnete Element ein RRC-Kontextinformationselement ist, das eine Handovervorbereitungssignalisierung umfasst, die Handovervorbereitungssignalisierung eine Endgeräteunterstützungssignalisierung umfasst, die ein Flugweginformationselement zum Tragen der Flugweginformation umfasst, und das Erhalten der Flugweginformation aus der ersten Handoveranforderungssignalisierung umfasst:
Abrufen der Flugweginformationen aus dem Flugweginformationselement, das in der Terminal-Assistenzsignalisierung enthalten ist.

4. Verfahren zur Informationsübertragung, das auf eine Zielbasisstation anwendbar ist, umfassend:
Empfang (510) von Flugweginformationen über ein unbemanntes Luftfahrzeug (UAV), die von einer Quellbasisstation gesendet werden;
Bereitstellung (520) eines Netzdienstes für das UAV gemäß den Flugweginformationen;
wobei die Quellbasisstation mit einer Mobilitätsmanagement-Einheit, MME, über eine erste S1-Schnittstelle verbunden ist, die MME mit der Zielbasisstation über eine zweite S1-Schnittstelle verbunden ist, und das Empfangen der von der Quellbasisstation gesendeten Flugweginformationen über das UAV umfasst:
Empfangen (710) einer zweiten Handoveranforderungssignalisierung, die von der MME gesendet wird, wobei die zweite Handoveranforderungssignalisierung die Flugweginformationen umfasst und von der MME in Reaktion auf den Empfang einer Handoveranforderungssignalisierung erzeugt wird, die die von der Quellbasisstation gesendeten Flugweginformationen trägt;
Abrufen (720) der Flugweginformationen aus der zweiten Handoveranforderungssignalisierung;
wobei die zweite Handoveranforderungssignalisierung ein zweites bezeichnetes Element umfasst, das zweite bezeichnete Element ein Quelle-Zielbasisstations-Transparent-Container-Informationselement ist, das eine Handovervorbereitungssignalisierung umfasst, die Handovervorbereitungssignalisierung eine Terminal- bzw. Endgeräteunterstützungssignalisierung umfasst, die ein Flugweginformationselement zum Tragen der Flugweginformation umfasst, und das Erhalten der Flugweginformation aus der zweiten Handoveranforderungssignalisierung umfasst:
Abrufen der Flugweginformationen aus dem Flugweginformationselement, das in der Terminal-Assistenzsignalisierung enthalten ist.

5. Eine Informationsübertragungsvorrichtung, die auf eine Quellbasisstation anwendbar ist, die gegenwärtig einen Netzdienst für ein unbemanntes Luftfahrzeug, UAV, bereitstellt, umfassend:
ein Erfassungsmodul (81), das so konfiguriert ist, dass es Flugweginformationen über das UAV erhält;
ein Sendemodul (82), das so konfiguriert ist, dass es die Flugweginformationen an eine Zielbasisstation sendet, damit die Zielbasisstation dem UAV entsprechend den Flugweginformationen einen Netzdienst bereitstellt;
wobei das Sendemodul umfasst:
ein Empfangssubmodul (91), das so konfiguriert ist, dass es einen vom UAV gesendeten Messbericht empfängt;
ein Bestimmungs-Submodul (92), das so konfiguriert ist, dass es als Reaktion auf die Bestimmung, dass eine Handover mit der Zielbasisstation gemäß dem Messbericht vorbereitet werden soll, die Flugweginformationen über das UAV an die Zielbasisstation sendet;
wobei die Quellbasisstation mit der Zielbasisstation über eine X2-Schnittstelle verbunden ist; und das Sendemodul umfasst:
ein erstes Addier-Submodul (101), das so konfiguriert ist, dass es die Flugweginformationen in eine erste Handoveranforderungssignalisierung einbringt;
ein erstes sendendes Submodul (102), das so konfiguriert ist, dass es die erste Handoveranforderungssignalisierung an die Zielbasisstation sendet;
wobei das erste addierende Submodul umfasst:
ein viertes Addier-Submodul (121), das so konfiguriert ist, dass es ein FlugwegInformationselement hinzufügt, um die Flugweg-Information in einer Terminal-Assistenzsignalisierung zu tragen, und die Flugweg-Information in das FlugwegInformationselement trägt;
ein fünftes Addier-Submodul (122), das so konfiguriert ist, dass es die Terminalunterstützungssignalisierung zu einer Handovervorbereitungssignalisierung hinzufügt;
ein sechstes Addier-Submodul (123), das so konfiguriert ist, dass es die Handovervorbereitungssignalisierung in ein erstes bestimmtes Element in der ersten Handoveranforderungssignalisierung überträgt, und das erste bestimmte Element ein RRC-Kontextinformationselement (Radio Resource Control) ist.

6. Eine Informationsübertragungsvorrichtung, die auf eine Quellbasisstation anwendbar ist, die gegenwärtig einen Netzdienst für ein unbemanntes Luftfahrzeug, UAV, bereitstellt, umfassend:
ein Erfassungsmodul (81), das so konfiguriert ist, dass es Flugweginformationen über das UAV erhält;
ein Sendemodul (82), das so konfiguriert ist, dass es die Flugweginformationen an eine Zielbasisstation sendet, damit die Zielbasisstation dem UAV entsprechend den Flugweginformationen einen Netzdienst bereitstellt;
wobei das Sendemodul umfasst:
ein Empfangs-Submodul (91), das so konfiguriert ist, dass es einen von dem UAV gesendeten Messbericht empfängt;
ein Bestimmungs-Submodul (92), das so konfiguriert ist, dass es als Reaktion auf die Bestimmung, dass ein Handover mit der Zielbasisstation gemäß dem Messbericht vorbereitet werden soll, die Flugweginformationen über das UAV an die Zielbasisstation sendet;
wobei die Quellbasisstation mit einer Mobilitätsmanagement-Einheit, MME, über eine erste S1-Schnittstelle verbunden ist, und die MME mit der Zielbasisstation über eine zweite S1-Schnittstelle verbunden ist; und das Sendemodul umfasst:
ein siebtes Addier-Submodul (131), das so konfiguriert ist, dass es die Flugweginformationen in eine für die Handover erforderliche Signalisierung einbringt;
ein zweites sendendes Submodul (132), das so konfiguriert ist, dass es die für die Handover erforderliche Signalisierung an das MME sendet, damit das MME die Flugweginformationen in der für die Handover erforderlichen Signalisierung durch eine zweite Handoveranforderungssignalisierung an die Zielbasisstation sendet;
wobei das siebte Addier-Submodul umfasst:
ein zehntes Addier-Submodul (151), das so konfiguriert ist, dass es ein FlugwegInformationselement zum Tragen der Flugweg-Information in der Terminal-Assistenzsignalisierung hinzufügt und die Flugweg-Information in das FlugwegInformationselement trägt;
ein elftes Addier-Submodul (152), das so konfiguriert ist, dass es die Terminalunterstützungssignalisierung zur Handovervorbereitungssignalisierung hinzufügt;
ein zwölftes Addier-Submodul (153), das so konfiguriert ist, dass es die Handovervorbereitungssignalisierung in ein zweites bezeichnetes Element in der für die Handover erforderlichen Signalisierung überträgt, wobei das zweite bezeichnete Element ein Quelle-Zielbasisstation-Transparent-Container-Informationselement ist.

7. Eine Informationsübertragungsvorrichtung, die auf eine Zielbasisstation anwendbar ist, umfassend:
ein Empfangsmodul (161), das so konfiguriert ist, dass es Flugweginformationen über ein unbemanntes Luftfahrzeug (UAV) empfängt, die von einer Quellbasisstation gesendet werden;
ein Verarbeitungsmodul (162), das so konfiguriert ist, dass es dem UAV gemäß den Flugweginformationen einen Netzdienst bereitstellt;
wobei die Quellbasisstation mit der Zielbasisstation über eine X2-Schnittstelle verbunden ist; und das Empfangsmodul umfasst:
ein erstes Empfangssubmodul (171), das so konfiguriert ist, dass es eine erste Handoveranforderungssignalisierung empfängt, die von der Quellbasisstation gesendet wird, wobei die erste Handoveranforderungssignalisierung die Flugweginformationen über das UAV enthält;
ein erstes Erfassungs-Submodul (172), das so konfiguriert ist, dass es die Flugweginformationen aus der ersten Handoveranforderungssignalisierung erhält;
wobei die erste Handoveranforderungssignalisierung ein erstes bezeichnetes Element umfasst und das erste bezeichnete Element ein Funkressourcensteuerungs (RRC)-Kontextinformationselement ist, das eine Handovervorbereitungssignalisierung umfasst, wobei die Handovervorbereitungssignalisierung eine Endgeräteunterstützungssignalisierung umfasst, die ein Flugweginformationselement zum Übertragen der Flugweginformation umfasst; und das erste erhaltende Submodul umfasst:
ein drittes Submodul (191), das so konfiguriert ist, dass es die Flugweginformationen von dem Flugweginformationselement erhält, das in der Terminal-Assistenzsignalisierung enthalten ist.

8. Informationsübertragungsvorrichtung, die auf eine Zielbasisstation anwendbar ist, umfassend:
ein Empfangsmodul (161), das so konfiguriert ist, dass es Flugweginformationen über ein unbemanntes Luftfahrzeug (UAV) empfängt, die von einer Quellbasisstation gesendet werden;
ein Verarbeitungsmodul (162), das so konfiguriert ist, dass es dem UAV gemäß den Flugweginformationen einen Netzdienst bereitstellt;
wobei die Quellbasisstation mit einer Mobilitätsmanagementeinheit, MME, über eine erste S 1-Schnittstelle verbunden ist und die MME mit der Zielbasisstation über eine zweite S 1-Schnittstelle verbunden ist; und das Empfangsmodul umfasst:
ein zweites Empfangssubmodul (201), das so konfiguriert ist, dass es eine zweite Handoveranforderungssignalisierung empfängt, die von der MME gesendet wird, wobei die zweite Handoveranforderungssignalisierung die Flugweginformationen umfasst und von der MME in Reaktion auf den Empfang einer Handoveranforderungssignalisierung erzeugt wird, die die von der Quellbasisstation gesendeten Flugweginformationen trägt;
ein viertes Submodul (202), das so konfiguriert ist, dass es die Flugweginformationen aus der zweiten Handoveranforderungssignalisierung erhält;
wobei die zweite Handoveranforderungssignalisierung ein zweites bezeichnetes Element umfasst, das zweite bezeichnete Element ein Quelle-Zielbasisstations-Transparent-Container-Informationselement ist, das eine Handovervorbereitungssignalisierung umfasst, die Handovervorbereitungssignalisierung eine Endgeräteunterstützungssignalisierung umfasst, die ein Flugweginformationselement zum Tragen der Flugweginformation umfasst; und das zweite Erlangungsuntermodul umfasst:
ein sechstes Submodul (221), das so konfiguriert ist, dass es die Flugweginformationen von dem Flugweginformationselement erhält, das in der Terminal-Assistenzsignalisierung enthalten ist.

## Revendications

1. Méthode de transmission d'informations, applicable à une station de base source qui fournit actuellement un service de réseau à un véhicule aérien sans pilote (UAV), comprenant :
obtenir (110) des informations sur la trajectoire de vol de l'UAV ;
envoyer (120) les informations relatives à la trajectoire de vol à une station de base cible pour que celle-ci fournisse un service de réseau au drone en fonction des informations relatives à la trajectoire de vol ;
dans lequel l'envoi des informations sur la trajectoire de vol à la station de base cible comprend :
réception d'un rapport de mesure envoyé par le drone ;
en réponse à la détermination de la préparation d'un transfert avec la station de base cible en fonction du rapport de mesure, envoyer les informations sur la trajectoire de vol du drone à la station de base cible ;
la station de base source est connectée à la station de base cible par l'intermédiaire d'une interface X2, et l'envoi des informations sur la trajectoire de vol à la station de base cible comprend :
transporter (310) les informations relatives à la trajectoire de vol dans un premier signal de demande de transfert ; et
envoyer (320) le premier signal de demande de transfert à la station de base cible, et
dans lequel l'intégration des informations relatives à la trajectoire de vol dans la première signalisation de demande de transfert comprend :
ajouter un élément d'information sur la trajectoire de vol pour transporter l'information sur la trajectoire de vol dans une signalisation d'assistance terminale ;
transporter les informations relatives à la trajectoire de vol dans l'élément d'information relatif à la trajectoire de vol ;
ajouter la signalisation d'assistance au terminal à une signalisation de préparation au transfert ; et
transporter la signalisation de préparation du transfert dans un premier élément désigné dans la première signalisation de demande de transfert, le premier élément désigné étant un élément d'information de contexte de contrôle des ressources radio (RRC).

2. Méthode de transmission d'informations, applicable à une station de base source qui fournit actuellement un service de réseau à un véhicule aérien sans pilote (UAV), comprenant :
obtenir (110) des informations sur la trajectoire de vol de l'UAV ;
envoyer (120) les informations relatives à la trajectoire de vol à une station de base cible pour que celle-ci fournisse un service de réseau au drone en fonction des informations relatives à la trajectoire de vol ;
dans lequel l'envoi des informations sur la trajectoire de vol à la station de base cible comprend :
réception d'un rapport de mesure envoyé par le drone ;
en réponse à la détermination de la préparation d'un transfert avec la station de base cible en fonction du rapport de mesure, envoyer les informations sur la trajectoire de vol du drone à la station de base cible ;
la station de base source est connectée à une entité de gestion de la mobilité (MME) par l'intermédiaire d'une première interface S1, la MME est connectée à la station de base cible par l'intermédiaire d'une seconde interface S1, et l'envoi des informations sur la trajectoire de vol à la station de base cible comprend :
transporter (410) les informations relatives à la trajectoire de vol dans une signalisation requise pour le transfert ;
envoyer (420) le signal de transfert requis au MME pour que le MME envoie les informations relatives à la trajectoire de vol dans le signal de transfert requis à la station de base cible par le biais d'un second signal de demande de transfert ;
dans lequel l'intégration des informations relatives à la trajectoire de vol dans la signalisation requise pour le transfert comprend :
ajouter un élément d'information sur la trajectoire de vol pour transporter l'information sur la trajectoire de vol dans une signalisation d'assistance terminale ;
transporter les informations relatives à la trajectoire de vol dans l'élément d'information relatif à la trajectoire de vol ;
ajouter la signalisation d'assistance au terminal à une signalisation de préparation au transfert ; et
transporter la signalisation de préparation du transfert dans un deuxième élément désigné dans la signalisation requise pour le transfert, le deuxième élément désigné étant un élément d'information de conteneur transparent entre la station de base source et la station de base cible.

3. Méthode de transmission d'informations, applicable à une station de base cible, comprenant :
réception (510) d'informations sur la trajectoire de vol d'un véhicule aérien sans pilote (UAV) envoyées par une station de base source ;
fournir (520) un service de réseau au drone en fonction des informations relatives à la trajectoire de vol ;
la station de base source est connectée à la station de base cible par l'intermédiaire d'une interface X2, et la réception des informations sur la trajectoire de vol du drone envoyées par la station de base source comprend :
réception (610) d'une première demande de transfert envoyée par la station de base source, la première demande de transfert comprenant les informations relatives à la trajectoire de vol du drone ;
obtenir (620) les informations relatives à la trajectoire de vol à partir de la première signalisation de demande de transfert ;
dans lequel la première signalisation de demande de transfert comprend un premier élément désigné, le premier élément désigné est un élément d'information de contexte de contrôle des ressources radio (RRC) comprenant une signalisation de préparation de transfert, la signalisation de préparation de transfert comprend une signalisation d'assistance terminale comprenant un élément d'information de trajectoire de vol pour transporter l'information de trajectoire de vol, et l'obtention de l'information de trajectoire de vol à partir de la première signalisation de demande de transfert comprend :
obtenir les informations sur la trajectoire de vol à partir de l'élément d'information sur la trajectoire de vol compris dans la signalisation d'assistance au terminal.

4. Méthode de transmission d'informations, applicable à une station de base cible, comprenant :
réception (510) d'informations sur la trajectoire de vol d'un véhicule aérien sans pilote (UAV) envoyées par une station de base source ;
fournir (520) un service de réseau au drone en fonction des informations relatives à la trajectoire de vol ;
la station de base source est connectée à une entité de gestion de la mobilité (MME) via une première interface S1, la MME est connectée à la station de base cible via une seconde interface S1, et la réception des informations sur la trajectoire de vol du drone envoyées par la station de base source comprend :
réception (710) d'une deuxième signalisation de demande de transfert envoyée par le MME, dans laquelle la deuxième signalisation de demande de transfert comprend les informations relatives à la trajectoire de vol et est générée par le MME en réponse à la réception d'une signalisation de demande de transfert qui contient les informations relatives à la trajectoire de vol envoyées par la station de base source ;
obtenir (720) les informations relatives à la trajectoire de vol à partir du deuxième signal de demande de transfert ;
dans lequel la deuxième signalisation de demande de transfert comprend un deuxième élément désigné, le deuxième élément désigné est un élément d'information de conteneur transparent de station de base source à cible comprenant une signalisation de préparation de transfert, la signalisation de préparation de transfert comprend une signalisation d'assistance terminale comprenant un élément d'information de trajectoire de vol pour transporter l'information de trajectoire de vol, et l'obtention de l'information de trajectoire de vol à partir de la deuxième signalisation de demande de transfert comprend :
obtenir les informations sur la trajectoire de vol à partir de l'élément d'information sur la trajectoire de vol compris dans la signalisation d'assistance au terminal.

5. Appareil de transmission d'informations, applicable à une station de base source qui fournit actuellement un service de réseau à un véhicule aérien sans pilote (UAV), comprenant :
un module d'obtention (81), configuré pour obtenir des informations sur la trajectoire de vol du drone ;
un module d'envoi (82), configuré pour envoyer les informations relatives à la trajectoire de vol à une station de base cible afin que celle-ci fournisse un service de réseau au drone en fonction des informations relatives à la trajectoire de vol ;
dans lequel le module d'envoi comprend
un sous-module de réception (91), configuré pour recevoir un rapport de mesure envoyé par le drone ;
un sous-module de détermination (92), configuré pour, en réponse à la détermination de la préparation d'un transfert avec la station de base cible en fonction du rapport de mesure, envoyer les informations sur la trajectoire de vol du drone à la station de base cible ;
la station de base source est connectée à la station de base cible par l'intermédiaire d'une interface X2 ; et le module d'envoi comprend :
un premier sous-module d'ajout (101), configuré pour transmettre les informations relatives à la trajectoire de vol dans une première signalisation de demande de transfert ;
un premier sous-module d'envoi (102), configuré pour envoyer le premier signal de demande de transfert à la station de base cible ;
dans lequel le premier sous-module d'addition comprend
un quatrième sous-module d'ajout (121), configuré pour ajouter un élément d'information sur la trajectoire de vol pour transmettre les informations sur la trajectoire de vol dans une signalisation d'assistance terminale, et pour transmettre les informations sur la trajectoire de vol dans l'élément d'information sur la trajectoire de vol ;
un cinquième sous-module d'ajout (122), configuré pour ajouter la signalisation d'assistance au terminal à une signalisation de préparation au transfert ;
un sixième sous-module d'ajout (123), configuré pour transporter la signalisation de préparation du transfert dans un premier élément désigné dans la première signalisation de demande de transfert, et le premier élément désigné est un élément d'information de contexte de contrôle des ressources radio (RRC).

6. Appareil de transmission d'informations, applicable à une station de base source qui fournit actuellement un service de réseau à un véhicule aérien sans pilote (UAV), comprenant :
un module d'obtention (81), configuré pour obtenir des informations sur la trajectoire de vol du drone ;
un module d'envoi (82), configuré pour envoyer les informations relatives à la trajectoire de vol à une station de base cible afin que celle-ci fournisse un service réseau au drone en fonction des informations relatives à la trajectoire de vol ;
dans lequel le module d'envoi comprend
un sous-module de réception (91), configuré pour recevoir un rapport de mesure envoyé par le drone ;
un sous-module de détermination (92), configuré pour, en réponse à la détermination de la préparation d'un transfert avec la station de base cible en fonction du rapport de mesure, envoyer les informations sur la trajectoire de vol du drone à la station de base cible ;
la station de base source est connectée à une entité de gestion de la mobilité (MME) par l'intermédiaire d'une première interface S1, et la MME est connectée à la station de base cible par l'intermédiaire d'une deuxième interface S1 ; et le module d'envoi comprend :
un septième sous-module d'ajout (131), configuré pour transmettre les informations relatives à la trajectoire de vol dans une signalisation requise pour le transfert ;
un deuxième sous-module d'envoi (132), configuré pour envoyer la signalisation de transfert obligatoire au MME afin que celui-ci envoie les informations relatives à la trajectoire de vol dans la signalisation de transfert obligatoire à la station de base cible par le biais d'une deuxième signalisation de demande de transfert ;
dans lequel le septième sous-module d'addition comprend :
un dixième sous-module d'ajout (151), configuré pour ajouter un élément d'information sur la trajectoire de vol afin de transmettre les informations sur la trajectoire de vol dans la signalisation d'assistance au terminal, et pour transmettre les informations sur la trajectoire de vol dans l'élément d'information sur la trajectoire de vol ;
un onzième sous-module d'ajout (152), configuré pour ajouter la signalisation d'assistance au terminal à la signalisation de préparation au transfert ;
un douzième sous-module d'ajout (153), configuré pour transporter la signalisation de préparation du transfert dans un deuxième élément désigné dans la signalisation requise pour le transfert, dans lequel le deuxième élément désigné est un élément d'information de conteneur transparent de station de base source à cible.

7. Appareil de transmission d'informations, applicable à une station de base cible, comprenant :
un module de réception (161), configuré pour recevoir des informations sur la trajectoire de vol d'un véhicule aérien sans pilote (UAV) envoyées par une station de base source ;
un module de traitement (162), configuré pour fournir un service de réseau au drone en fonction des informations relatives à la trajectoire de vol ;
la station de base source est connectée à la station de base cible par l'intermédiaire d'une interface X2 ; et le module de réception comprend :
un premier sous-module de réception (171), configuré pour recevoir une première signalisation de demande de transfert envoyée par la station de base source, la première signalisation de demande de transfert comprenant les informations sur la trajectoire de vol de l'UAV ;
un premier sous-module d'obtention (172), configuré pour obtenir les informations relatives à la trajectoire de vol à partir de la première signalisation de demande de transfert ;
dans lequel la première signalisation de demande de transfert comprend un premier élément désigné, et le premier élément désigné est un élément d'information de contexte de contrôle de ressources radio (RRC) comprenant une signalisation de préparation de transfert, la signalisation de préparation de transfert comprend une signalisation d'assistance terminale comprenant un élément d'information de trajectoire de vol pour transporter l'information de trajectoire de vol ; et le premier sous-module d'obtention comprend :
un troisième sous-module d'obtention (191), configuré pour obtenir les informations sur la trajectoire de vol à partir de l'élément d'information sur la trajectoire de vol compris dans la signalisation d'assistance au terminal.

8. Appareil de transmission d'informations, applicable à une station de base cible, comprenant :
un module de réception (161), configuré pour recevoir des informations sur la trajectoire de vol d'un véhicule aérien sans pilote (UAV) envoyées par une station de base source ;
un module de traitement (162), configuré pour fournir un service de réseau au drone en fonction des informations relatives à la trajectoire de vol ;
la station de base source est connectée à une entité de gestion de la mobilité (MME) par l'intermédiaire d'une première interface S1, et la MME est connectée à la station de base cible par l'intermédiaire d'une deuxième interface S1 ; et le module de réception comprend :
un deuxième sous-module de réception (201), configuré pour recevoir une deuxième signalisation de demande de transfert envoyée par le MME, dans laquelle la deuxième signalisation de demande de transfert comprend les informations relatives à la trajectoire de vol et est générée par le MME en réponse à la réception d'une signalisation de demande de transfert qui contient les informations relatives à la trajectoire de vol envoyées par la station de base source ;
un quatrième sous-module d'obtention (202), configuré pour obtenir les informations relatives à la trajectoire de vol à partir de la deuxième signalisation de demande de transfert ;
dans lequel la deuxième signalisation de demande de transfert comprend un deuxième élément désigné, le deuxième élément désigné est un élément d'information de conteneur transparent de station de base source à cible comprenant une signalisation de préparation de transfert, la signalisation de préparation de transfert comprend une signalisation d'assistance terminale comprenant un élément d'information de trajectoire de vol pour transporter l'information de trajectoire de vol ; et le deuxième sous-module d'obtention comprend :
un sixième sous-module d'obtention (221), configuré pour obtenir les informations sur la trajectoire de vol à partir de l'élément d'information sur la trajectoire de vol compris dans la signalisation d'assistance au terminal.
